# DEMANDE DE BREVET EUROPEEN

(11) **EP 1 124 371 A1**
(43) Date de publication de la demande: **16.08.2001**
(21) Numéro de dépôt: 01400205.9
(22) Date de dépôt: 25.01.2001
(51) Int. Cl.: H04N 1/00, H04N 5/44

(54) **Appareil et procédé de transmission d'une image vidéo**

(30) Priorité: 09.02.2000 FR 0001582
(71) Demandeur: SAGEM S.A., 75116 Paris (FR)
(72) Inventeur: Meulle, M. Philippe, 78300 Poissy (FR)
(74) Mandataire: Schmit, Christian Norbert Marie

(57) **Abrégé**

L'invention concerne un appareil et un procédé de transmission d'une image vidéo. Une image vidéo affichée sur un écran de télévision numérique est envoyée, via le réseau Internet, après des opérations de capture, de compression, de mémorisation et de sélection de destinataires. Le procédé peut être mis en oeuvre de façon plus ou moins automatique proposant notamment différentes étapes de sélection et de confirmation.

## Description

La présente invention a pour objet un appareil et un procédé de transmission d'images vidéo. Elle permet d'envoyer via le réseau Internet une image vidéo affichée sur un écran de télévision numérique. L'image vidéo qui peut ainsi être transmise peut provenir d'un opérateur de télévision émettant des signaux télévisuels ou d'un appareil de lecture de signaux vidéo du type magnétoscope numérique ou lecteur DVD.

D'une façon générale, le domaine de l'invention est celui de la télévision numérique. L'invention s'inscrit dans le cadre du développement d'une synergie entre deux domaines distincts qui sont le domaine de la télévision et le domaine des communications Internet. Elle a pour but d'offrir la possibilité à un téléspectateur de transmettre à un ou plusieurs destinataires une image qu'il visualise sur son écran de télévision. En outre, le nombre d'opérations que l'utilisateur doit effectuer pour réaliser ce transfert d'image est limité grâce à l'invention dont l'un des objets est de rendre l'ensemble des opérations nécessaires aussi automatique que possible.

L'utilisation du réseau Internet permet aujourd'hui d'envoyer à un ou plusieurs destinataires des messages de différents types : du texte, des tableaux, du son ou encore des images peuvent être transmises. Les images qui peuvent ainsi être envoyées peuvent provenir notamment d'un site Internet auquel l'utilisateur a accédé et duquel il a téléchargé des images grâce à des outils dits de navigation. Un navigateur Internet est un outil, le plus souvent informatique, qui permet de visualiser des informations issues du réseau Internet. Un navigateur Internet comporte donc un microprocesseur commandé par un programme et doté de capacités de communication. Le programme traite les informations reçues en vue de leur affichage sur un écran.

Lorsqu'un utilisateur se connecte à un site sur le réseau Internet en utilisant un navigateur, le navigateur télécharge depuis le site des informations sous un format spécial, en général HTML. HTML signifie Hypertext Language Markup ou langage pour l'édition de liens hypertext. Ces informations sont contenues dans un fichier, qui une fois téléchargé complètement, est interprété par le navigateur. Ce fichier au format HTML est aussi appelé page Internet. Il contient des informations de données affichables et des informations relatives au format dans lequel il faut afficher ces données. Les données à afficher sont repérables à l'aide de leur nom qui permet au navigateur de les localiser sur le réseau Internet et de les télécharger pour affichage. Dans un exemple, on considère une image dont l'adresse sur le réseau Internet est contenue dans le fichier au format HTML. A la lecture de cette adresse, le navigateur se connecte à cette adresse, télécharge l'image puis l'affiche. Les données relatives à l'image affichée sont mémorisées dans l'ordinateur de l'utilisateur qui peut, grâce à la fonction messagerie du réseau Internet, transmettre l'image à un ou plusieurs destinataires. Comme on peut le voir, l'envoi d'images via le réseau Internet nécessite un ensemble d'opérations relativement fastidieuses, et par ailleurs ne permet pas l'envoi d'images émises par un opérateur de télévision et reçues par le téléviseur.

Dans l'état de la technique, il existe également des récepteurs de télévision numérique qui sont équipés d'un dispositif de connexion au réseau Internet soit directe, soit par l'intermédiaire d'un décodeur, et qui permettent l'affichage sur l'écran de télévision d'informations reçues via le réseau Internet. Ainsi, on peut ouvrir une fenêtre graphique qui occulte une partie de l'image vidéo, et accéder aux services du réseau Internet via la fenêtre graphique, tout en continuant à recevoir les signaux vidéo. Cependant, dans ce type de fonctionnement, les signaux issus du réseau Internet et les signaux reçus depuis les opérateurs de télévision sont destinés à des applications différentes qui, même si elles cohabitent sur un même écran de télévision, n'offrent pas de possibilités d'interactions entre elles. Par ailleurs, l'emploi d'un clavier et d'une souris est toujours nécessaire pour les applications associées au réseau Internet, ce qui n'est pas d'un emploi très instinctif.

Enfin, il existe aujourd'hui des téléviseurs numériques présentant un certain nombre d'applications, et notamment une application dite de capture d'images. Cette application permet de stopper le flux d'images reçu par le téléviseur numérique depuis un opérateur de télévision, ce qui a pour conséquence de laisser une image fixe sur l'écran de télévision. On peut ainsi étudier une image en détails, ou effectuer quelques opérations de traitements d'image. Mais les données relatives à cette image, qui sont contenues dans une mémoire vidéo, ne sont pas exploitable et demeurent totalement étrangères, inaccessibles, pour les applications associées au réseau Internet. En particulier, il n'est toujours pas possible de transmettre à un ou plusieurs destinataires via le réseau Internet une image issue d'un flux d'images de télévision.

L'appareil et le procédé selon l'invention répondent à ce problème. A cet effet, l'invention met en oeuvre des moyens, au sein d'un dispositif de capture, pour capturer et mémoriser dans une mémoire spécifique des images issues d'un flux vidéo, et des moyens, au sein d'un dispositif de transmission, pour transmettre via le réseau Internet, l'image ainsi capturée. Ainsi, une image unique capturée au sein d'un téléviseur peut être transmise depuis ce téléviseur vers un autre appareil relié au réseau Internet, cet appareil pouvant notamment être un autre téléviseur. En outre, l'invention propose des moyens pour compresser et mettre dans un format compatible à un transfert via le réseau Internet, les données relatives à l'image capturée. Par ailleurs, l'invention propose un ensemble d'applications associées au dispositif de capture et au dispositif de transmission qui rendent confortables d'utilisation et de mise en oeuvre l'appareil et le procédé selon l'invention.

L'invention a donc pour objet un appareil de télévision numérique comprenant notamment :
- une mémoire d'images vidéo ;
- un moyen d'affichage d'images vidéo ;
caractérisé en ce qu'il comprend :
- des moyens de capture d'images vidéo, comportant une mémoire de capture pour mémoriser des données numériques correspondant à une image unique de la mémoire vidéo ;
- des moyens de compression de données pour comprimer les données contenues dans la mémoire de capture ;
- un dispositif de transmission pour transmettre, via un réseau Internet, les données numériques comprimées par les moyens de compression.

Dans un mode préféré de réalisation de l'invention, l'appareil comporte des moyens de confirmation de capture qui permettent à l'utilisateur de s'assurer que l'image qui va être transmise correspond bien à l'image qu'il pense avoir capturée. Des moyens de sélection de destinataires sont également proposés dans l'appareil selon l'invention.

Un autre objet de l'invention est un procédé de transmission d'une image vidéo reçue par un appareil de télévision numérique caractérisé en ce qu'il comprend les étapes consistant à, dans ou depuis l'appareil de télévision numérique :
- sélectionner une image vidéo en effectuant une opération de capture de l'image vidéo, consistant à recopoier depuis une mémoire vidéo vers une mémoire de capture un ensembles de données numériques correspondant à l'image vidéo affichée sur un écran de télévision ;
- effectuer une opération de compression des données numériques mémorisées dans la mémoire de capture ;
- mémoriser les données numériques comprimées dans une mémoire de transmission ;
- transmettre vers un ou plusieurs destinataires, via un réseau Internet , les données numériques comprimées ;

Une étape de confirmation de la sélection de l'image vidéo est proposée.

Suite à l'opération de capture, une temporisation peut être marquée pour que le contenu de la mémoire vidéo soit figé pendant la temporisation et que l'image vidéo affichée sur l'écran de télévision corresponde à l'image capturée.

Différentes opérations destinées à améliorer l'environnement du procédé de transmission selon l'invention sont proposées. L'invention et ses différentes applications seront mieux comprises à la lecture de la description qui suit et à l'examen de la figure qui l'accompagne. Celle-ci n'est présentée qu'à titre indicatif et nullement limitatif de l'invention.

La figure unique montre une structure interne simplifiée de l'appareil selon l'invention.

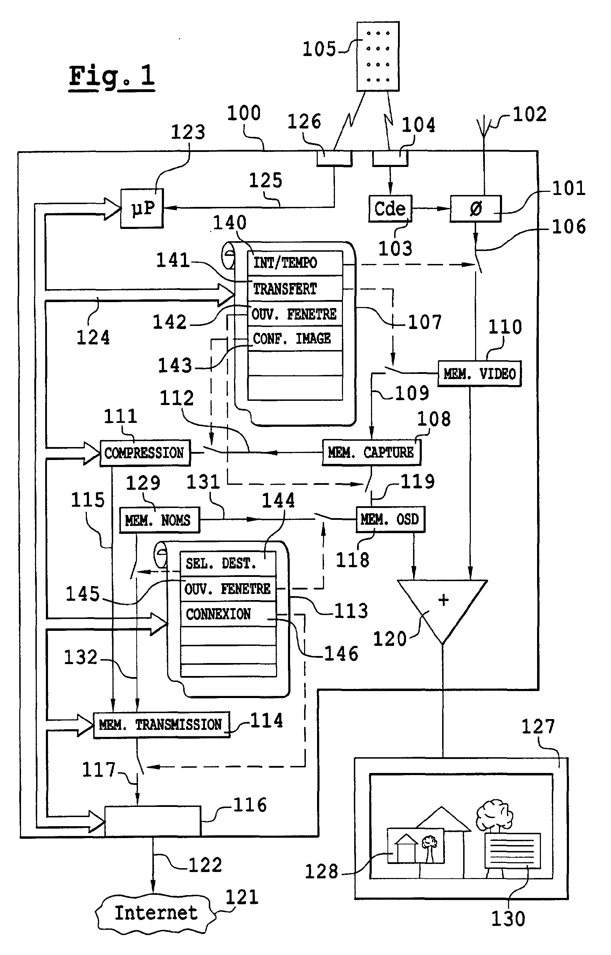

La figure 1 montre un appareil de télévision numérique 100 selon l'invention. L'appareil 100 comporte un module de réception 101 de signaux télévisuels qui reçoit via une antenne 102 un flux d'informations de programmes de télévision. Le module de réception 101 pourrait être également connecté à un réseau de télévision câblée ou à un système de réception par satellite. Par ailleurs, le module de réception 101 est connecté à un circuit de commande 103 du module de réception 101. Le circuit de commande 103 indique au module de réception 101 quel programme de télévision il doit extraire du flux d'informations qu'il reçoit par l'antenne 102. Dans le cadre d'une réception analogique traditionnelle, il s'agit de l'accord d'un oscillateur du module de réception 101 sur la fréquence de la porteuse qui porte les informations du programme de télévision qui doit être extrait. Les signaux analogiques reçus sont numérisés au sein du module de réception 101.

Un premier capteur 104, dans cet exemple infrarouge, reçoit des signaux émis par une télécommande 105. Une cellule infrarouge du premier capteur 104 délivre un signal qui permet à l'utilisateur de contrôler le circuit de commande 103. Les signaux numérisés issus du module de réception 101 sont envoyés dans une mémoire vidéo 110 via une liaison unidirectionnelle 106. Une première mémoire de programmes 107, dite mémoire de programmes de capture, est destinée à la gestion des différentes opérations qui peuvent intervenir pour réaliser une capture d'images. Une mémoire 108, dite mémoire de capture, est reliée par une liaison unidirectionnelle 109 à la mémoire vidéo 110. La mémoire de capture 108 et la mémoire de programmes de capture 107 constituent un dispositif de capture d'images vidéo.

Une unité de compression 111 est reliée par une liaison unidirectionnelle 112 à la mémoire de capture 108.

Une deuxième mémoire de programmes 113, dite mémoire de programmes de transmission, contient différentes applications destinées à l'exécution des différentes opérations qui peuvent intervenir pour réaliser la transmission vers un ou plusieurs destinataires d'une image capturée. Une mémoire de transmission 114 est reliée à l'unité de compression 111 au moyen d'une liaison unidirectionnelle 115.

Une mémoire d'incrustation d'images 118, ou mémoire d'OSD (On Screen Display dans la littérature anglaise), est connectée par une liaison unidirectionnelle 119 à la mémoire de capture 108. Un module de mémoire 129, dit mémoire de noms, est également connecté à la mémoire d'OSD 118 via une liaison unidirectionnelle 131. Le module de mémoire 129 est par ailleurs connecté à la mémoire de transmission 114 via une liaison unidirectionnelle 132. Un module de superposition 120 admet à une première entrée des signaux issus de la mémoire vidéo 110, et à une deuxième entrée des signaux issus de la mémoire d'OSD 118. Une interface Internet 116, comprenant notamment un modem, est reliée à la mémoire de transmission 114 au moyen d'une liaison unidirectionnelle 117. L'interface Internet 116 est reliée au réseau Internet 121 au moyen d'une liaison 122 bidirectionnelle. La mémoire de programmes de transmission 113, la mémoire de transmission 114, l'interface Internet 116 et la mémoire de noms 129, appartiennent à un dispositif dit de transmission.

Un microprocesseur 123 est relié au moyen d'un bus de communication bidirectionnel 124 à l'unité de compression 111, à l'interface Internet, 116 et aux mémoires de programmes 107 et 113. II gère l'ensemble des opérations intervenant dans le procédé de transmission, via le réseau Internet d'une image vidéo reçue par l'appareil de télévision 100. Le microprocesseur 123 est par ailleurs relié au moyen d'une liaison unidirectionnelle 125 à un deuxième capteur 126 qui est de préférence semblable au premier capteur 104. Les deux capteurs 126 et 104 peuvent recevoir des signaux de la même télécommande 105. Dans une variante de l'invention, les deux capteurs 104 et 126 peuvent être confondus.

Le bus de communication bidirectionnel 124 véhicule des signaux de commande, d'adresse ou de données. Les différentes mémoires selon l'invention sont également connectées à ce bus; par soucis de clarté de la figure, ces connexions ne sont pas toutes représentées. Toutes les liaisons unidirectionnelles représentées sont, dans la pratique, des bus de données qui assurent des échanges de données entre deux éléments de l'appareil décrit, ces échanges étant toujours effectués dans un unique sens, indiqué par des flèches sur le dessin. Ces liaisons peuvent être intégrées dans le bus de communication bidirectionnel 124. Dans la pratique, les mémoires de programme 107 et 113 peuvent constituer un unique module de mémoire de programmes, et les autres mémoires représentées peuvent être rassemblées dans un unique module de mémoire de données. Par ailleurs, il est évident que des éléments représentés à la figure 1 peuvent être disposés dans un dispositif connecté au téléviseur, par exemple un décodeur.

Le fonctionnement de l'appareil de télévision selon l'invention est à présent expliqué.

Avant d'être affichées sur un écran de télévision 127, les données numériques correspondant à l'image à afficher sont stockées sous forme d'un tableau de valeurs dans la mémoire vidéo 110. Chaque élément d'image élémentaire, appelé pixel, est codé par un nombre de bits qui dépend de la résolution de la télévision. La mémoire vidéo peut contenir simultanément deux ou trois images qui vont être affichées sur l'écran 127. Lorsqu'un téléspectateur regarde une émission de télévision sur son téléviseur, il peut effectuer une opération de capture de l'image grâce à une application d'interruption 140 de la mémoire de programmes de capture 107. La fonction d'interruption 140 interrompt le transfert de données sur la liaison unidirectionnelle 106 entre le module de réception 101 et la mémoire vidéo 110. La mémoire vidéo 110 n'est alors plus rafraîchie et en conséquence, elle affiche en permanence l'image ainsi capturée. L'application d'interruption 140 peut être accompagnée d'une temporisation qui bloque le flux d'images vidéo rafraîchissant la mémoire vidéo 110 pendant une durée prédéterminée. Au-delà de cette durée, la transmission et l'affichage des signaux télévisuels reprend son cours habituel. Le téléspectateur dispose donc du temps de la temporisation pour décider si l'image fixe sur son téléviseur, disponible dans la mémoire vidéo 110, doit faire l'objet d'une opération de transfert en vue d'une transmission via le réseau Internet. Si c'est le cas, une application de transfert 141 déclenche l'envoi des données correspondant à l'image affichée sur le téléviseur depuis la mémoire vidéo 110 vers la mémoire de capture 108.

Si le téléspectateur n'a pas décidé pendant la période de temporisation si l'image fixe sur le téléviseur devait faire l'objet d'une opération de transmission, le contenu de la mémoire vidéo 110 correspondant à l'image vidéo affichée sur l'écran 128 est automatiquement transférée vers la mémoire de capture 108. Par contre, si l'utilisateur a émis le souhait de ne pas effectuer d'opération de transfert de l'image figée sur l'écran de télévision 128, aucune donnée n'est transmise dans la mémoire de capture 108.

Dans tous les cas où les données correspondant à une image capturée sont transmises dans la mémoire de capture 108, une application d'ouverture de fenêtre graphique 142 de la mémoire de programme de capture 107 peut être mise en oeuvre. Cette application assure le transfert des données relatives à l'image capturée depuis la mémoire de capture 108 vers la mémoire d'OSD 118 via la liaison unidirectionnelle 117. Cette application permet au téléspectateur, une fois la temporisation de la fonction d'interruption écoulée, d'ouvrir une première fenêtre graphique 128 qui lui permet de visualiser de nouveau, dans la première fenêtre graphique 128, l'image capturée. Le format de la fenêtre graphique ainsi ouverte a été préalablement déterminé par des paramètres contenus dans l'application d'ouverture de fenêtres graphiques 142. Le contenu de la mémoire d'OSD 118 est alors superposé au flux d'images vidéos, provenant d'un opérateur de télévision, au moyen du module de superposition 120.

Une fonction de confirmation de capture 143 peut alors permettre à l'utilisateur de déclencher les opérations relatives à la transmission de l'image capturée. La fonction de confirmation de capture 143 est activée lorsque l'utilisateur veut effectivement transmettre via le réseau Internet l'image capturée.

L'unité de compression 111 permet de transférer les données de la mémoire de capture vers la mémoire de transmission 114 sous une forme comprimée, de façon à ce que la durée de l'émission sur le réseau Internet du fichier ainsi constitué ne soit pas trop longue. Par ailleurs, l'unité de compression 111 est paramétrable par l'utilisateur. Ce dernier peut ainsi définir la résolution de l'image qu'il souhaite transférer : une résolution optimale peut permettre au destinataire de recevoir l'image telle qu'elle a été capturée ; une moins bonne résolution permet un temps de transfert de données, et donc un coût de communication moins important. Le réglage de la résolution peut se faire via la télécommande 105 et le microprocesseur 123.

Une application de sélection de destinataires 144 de la mémoire de programmes de transmission 113 est alors activée. Cette application fait appel à une application d'ouverture de fenêtre graphique 145 de la mémoire de programmes de transmission 113 qui permet de définir une deuxième fenêtre graphique 130 sur l'écran de télévision 127. Dans cette deuxième fenêtre graphique 130, l'utilisateur peut faire défiler, au moyen de la télécommande 105, une liste de noms contenus dans la mémoire de noms 130, et choisir ainsi un ou plusieurs destinataires à qui il envoie l'image capturée. Le contenu de la mémoire de noms 130 est déterminé par l'utilisateur de l'appareil selon l'invention. Il peut ainsi mémoriser les noms d'éventuels futurs destinataires de ces messages, les noms étant nécessairement associés dans la mémoire de noms 129 à une adresse Internet appropriée.

La sélection du ou des destinataires a pour effet de transférer des adresses Internet des correspondants choisis dans une zone réservée de la mémoire de transmission 114. L'interface Internet 116 est capable d'interpréter l'ensemble des données de la mémoire de transmission 114 et de transmettre ainsi une image capturée au destinataire choisi. Une fois les destinataires déterminés, une fonction de connexion 146 de la mémoire de programmes de transmission 113 déclenche la connexion de l'appareil de télévision 100 au réseau Internet 121 via l'interface Internet 116. L'image capturée est alors transmise à l'ensemble des destinataires précédemment sélectionné.

Seule l'image capturée est transmise au destinataire avec, éventuellement, le nom de l'expéditeur. Par contre, le contenu de la fenêtre graphique 130, ou de toute autre fenêtre graphique présente sur l'écran de télévision au moment de la capture d'images, ne fait pas l'objet de la transmission. La structure de l'appareil selon l'invention montre en effet que seules les données du flux d'images de télévision issu du module de réception 101 font l'objet d'une capture et d'une transmission. Par contre, il est évident que le flux d'images peut provenir d'autres sources numériques, du type sortie de magnétoscope numérique ou de lecteur DVD.

L'ensemble des applications des différentes mémoires de programme 107 et 113 peuvent être mises en oeuvre par l'utilisateur au moyen de la télécommande 105. Le procédé de transmission décrit peut, dans une version simplifiée de l'invention, être mise en oeuvre de façon beaucoup plus automatique. A cet effet, dès qu'une image est capturée dans la mémoire vidéo 110 au moyen de l'application d'interruption 140, l'application de transfert 142 est exécutée automatiquement, tout comme l'application de confirmation d'image 143. Dans cette version simplifiée, l'application d'ouverture de fenêtre graphique 142 n'est plus nécessairement accessible. Ainsi, dès leur capture, les données relatives à l'image sont transférées dans l'unité de compression 111 puis dans la mémoire de transmission 114. L'application de connexion 146 peut alors également s'exécuter automatiquement. L'application d'ouverture de fenêtre graphique 145 et l'application de sélection de destinataire 144 ne sont plus forcément accessibles. Selon l'invention, une touche particulière de la télécommande 105 permet de provoquer la capture d'images et la transmission automatique vers un destinataire correspondant à la touche particulière. Plusieurs touches de la télécommande 105, correspondant à des destinataires différents, peuvent également être proposées. Lorsque l'utilisateur appuie sur une de ces touches, un signal infrarouge issu de la télécommande 105 et reçu par le capteur 126 est interprété par le microprocesseur 123 qui détermine après avoir effectué la capture le ou les destinataires correspondant au signal infrarouge reçu. Les adresses Internet de ces destinataires sont mémorisées dans la mémoire de transmission 114.

Ainsi, les étapes de capture, de compression, de mémorisation et de transmission sont effectuées de façon automatique dès que la sélection de l'image vidéo a été réalisée. L'étape de détermination et de mémorisation du ou des destinataires de l'opération de transmission peut donc être préalable à l'étape de sélection de l'image vidéo dans le cas d'une automatisation du procédé, ou être effectuée à l'issue de l'étape de mémorisation des données numériques dans la mémoire de transmission dans le cas où l'utilisateur a accès aux différentes applications proposées.

Dans la version automatisée de l'invention, la temporisation de l'application d'interruption 140 peut être nulle afin de rendre les opérations de capture et de transmission le moins perturbant possible pour la visualisation d'une émission de télévision.

L'invention peut évidemment être mise en oeuvre de façon plus ou moins automatique en décidant de faire intervenir ou non les différentes applications des mémoires de programme 107 et 113. Ces applications peuvent, par ailleurs, être remplacées par des circuits spécialisés.

Dans la description de ce mode de réalisation de l'invention, seule une transmission d'images via le réseau Internet a été décrite. Le procédé selon l'invention peut cependant être mis en oeuvre avec une phase de transmission vers un appareil de réception de fac-similés.

## Revendications

1. Appareil de télévision numérique (100) comprenant notamment :
- une mémoire d'images vidéo (110);
- un moyen d'affichage (127) d'images vidéo ;
caractérisé en ce qu'il comprend:
- des moyens de capture d'images vidéo, comportant une mémoire de capture (108) pour mémoriser des données numériques correspondant à une image unique de la mémoire vidéo (110);
- des moyens de compression de données (111) pour comprimer les données contenues dans la mémoire de capture ;
- un dispositif de transmission (113; 114; 116; 129) pour transmettre, via un réseau Internet (121), les données numériques comprimées par les moyens de compression (111).

2. Appareil selon la revendication 1 caractérisé en ce qu'il comprend des moyens de confirmation pour valider l'image capturée.

3. Appareil selon l'une des revendications précédentes caractérisé en ce qu'il comprend des moyens de sélection d'un destinataire de la transmission.

4. Procédé de transmission d'une image vidéo reçue par un appareil de télévision numérique (100) caractérisé en ce qu'il comprend les étapes consistant à, dans ou depuis l'appareil de télévision numérique (100):
- sélectionner une image vidéo en effectuant une opération de capture de l'image vidéo, consistant à recopoier depuis une mémoire vidéo (110) vers une mémoire de capture (108) un ensembles de données numériques correspondant à l'image vidéo affichée sur un écran de télévision (127);
- effectuer une opération de compression (111) des données numériques mémorisées dans la mémoire de capture (108);
- mémoriser les données numériques comprimées dans une mémoire de transmission (114);
- transmettre vers un ou plusieurs destinataires, via un réseau Internet (121), les données numériques comprimées ;

5. Procédé de transmission d'une image vidéo selon la revendication 4 caractérisé en ce qu'il comprend l'étape supplémentaire consistant à confirmer, la sélection de l'image vidéo.

6. Procédé de transmission d'une image vidéo selon l'une des revendications 4 ou 5 caractérisé en ce qu'il comprend l'étape supplémentaire consistant à déterminer et mémoriser, préalablement à l'étape de sélection de l'image vidéo, un ou plusieurs destinataires de l'opération de transmission.

7. Procédé de transmission d'une image vidéo selon l'une des revendications 4 ou 5 caractérisé en ce qu'il comprend l'étape supplémentaire consistant à déterminer et mémoriser, à l'issue de l'étape de mémorisation des données numériques comprimées dans la mémoire de transmission (114), un ou plusieurs destinataires de l'opération de transmission.

8. Procédé de transmission d'une image vidéo selon l'une des revendications 4 à 7 caractérisé en ce qu'il comprend l'étape supplémentaire consistant à marquer une temporisation suite à l'opération de capture pour que le contenu de la mémoire vidéo soit figé pendant la temporisation et que l'image vidéo affichée sur l'écran de télévision corresponde à l'image capturée.

9. Procédé de transmission d'une image vidéo selon la revendication 4 caractérisée en ce que les étapes de capture de compression, de mémorisation et de transmission sont effectuées de façon automatique dès que la sélection de l'image vidéo a été réalisée.
